# EUROPÄISCHE PATENTSCHRIFT

(11) **EP 0 699 007 B1**
(45) Veröffentlichungstag und Bekanntmachung des Hinweises auf die Patenterteilung: **15.01.2003**
(21) Anmeldenummer: 95113050.9
(22) Anmeldetag: 18.08.1995
(51) Int. Cl.: H04Q 3/66

(54) **Verfahren zur Leitweglenkung in einem Fernmeldenetz**
Routing method in a telecommunications network
Procédé d'acheminement dans un réseau de télécommunication

(30) Priorität: 24.08.1994 DE 4430054
(43) Veröffentlichungstag der Anmeldung: 28.02.1996
(73) Patentinhaber: SIEMENS AKTIENGESELLSCHAFT, 80333 München (DE)
(72) Erfinder: Stampfl, Robert, Dipl.-Inform., D-85411 Hohenkammer (DE)

(56) Entgegenhaltungen:
- EP-A- 0 540 257
- EP-A- 0 549 127
- EP-A- 0 569 175
- DE-A- 4 209 906
- US-A- 4 555 594
- US-A- 5 226 075
- US-A- 5 430 719

## Beschreibung

Die Erfindung betrifft ein Verfahren zur Leitweglenkung von Fernmeldeverbindungen in einem Netz nach dem Oberbegriff des Patenanspruches 1.

Ein Netz in diesem Sinne wird durch eine Verbindung mehrerer, für sich jeweils eigenständiger Informationssysteme, z.B. Kommunikations- oder Vermittlungssysteme gebildet, die als Knoten des Netzes bezeichnet werden und Informationen an andere Knoten senden und von diesen empfangen können.

Ein vermaschtes Netz liegt vor, wenn Knoten mit mindestens zwei weiteren Knoten verbunden sind und als voll vermaschtes Netz wird ein Netz bezeichnet, bei dem jeder Knoten mit jedem anderen Knoten des Netzes unmittelbar verbunden ist.

Für eine Leitweglenkung von Fernmeldeverbindungen besteht bereits in einem vermaschten Netz die Gefahr, daß bei sogenannten Bündelengpässen, wobei unter einem Bündel jeweils eine Knotenverbindung verstanden wird, die Gefahr einer Schleifenbildung gegeben ist. Wird der Bündelengpaß, der zu der Schleifenbildung geführt hat, nicht behoben, so durchläuft die Fernmeldeverbindung die Schleife solange, bis sämtliche Bündelelemente belegt sind.

Aus der deutschen Patentschrift DE 42 09 906 ist bereits ein Verfahren zur Leitweglenkung von Fernmeldeverbindungen in einem vermaschten Netz bekannt. Bei diesem Verfahren ist in eine der aufzubauenden Fernmeldeverbindung zugeordnete Signalisierungsinformation jeweils eine den Zielknoten und den Ursprungsknoten identifizierende Zusatzinformation eingefügt. Anhand dieser Zusatzinformationen wird in einem Knoten jeweils der unmittelbar folgend zu durchlaufende Knoten bestimmt. Durch diese Maßnahme kann die Gefahr einer Schleifenbildung verringert werden. Die Gefahr von Netzschleifen kann bei einer Variante des bekannten Verfahrens vollkommen ausgeschlossen werden, wenn von jedem Knoten, zu dem die Fernmeldeverbindung geführt wird, eine den durchlaufenen Knoten identifizierende dritte Zusatzinformation in die Signalisierungsinformation der Fernmeldeverbindung eingefügt wird. In den Knoten wird diese dritte Zusatzinformation dann zusätzlich benutzt, um für eine Fernmeldeverbindung den unmittelbar folgenden zu durchlaufenden Knoten - Transitknoten - zu bestimmen. Dazu ist in jedem Knoten jeweils eine Routeninformation gespeichert, die abhängig vom Zielknoten der Fernmeldeverbindung unmittelbar angeschlossene, in Richtung des Zielknotens weisende Knotenverbindungen identifiziert. Die bei diesem Verfahren auftretende sukzessive Verlängerung der Signalisierungsinformation kann mitunter Probleme mit sich bringen.

Obwohl sich mit der zuletzt genannten Verfahrensvariante Netzschleifen sicher vermeiden lassen, kann sie insbesondere den Anforderungen im Hinblick auf Netze, die aus Knoten unterschiedlicher Betreiber zusammengesetzt sind, nicht genügen. Nicht selten tritt bei derartigen Netzkonfigurationen der Fall ein, daß der Betreiber eines oder mehrerer Knoten nicht mit allen anderen Knotenbetreibern eine Nutzungsvereinbarung getroffen hat. Um in solchen Fällen sicherstellen zu können, daß der Aufbau einer Fernmeldeverbindung nicht über einen Knoten bzw. eine Knotenverbindung gelenkt wird, deren Benutzung dem die Fernmeldeverbindung veranlassenden Teilnehmer untersagt ist, ist es erforderlich, in die Signalisierungsinformation der Fernmeldeverbindung eine dem Teilnehmer zugehörige Berechtigungsinformation einzufügen. Diese Berechtigungsinformation identifiziert die Knoten bzw. Knotenverbindungen, die beim Aufbau der betreffenden Fernmeldeverbindung nicht benützt werden dürfen, d.h. die für die aufzubauende Fernmeldeverbindung gesperrt sind. Zur Vermeidung von Schleifen kann die Berechtigungsinformation in dieser Form jedoch nicht dienen, da sie nur an die einzelnen Teilnehmer gebunden ist und die Netztopologie nicht berücksichtigt.

Aufgabe der vorliegenden Erfindung ist es, ein Verfahren für eine Leitweglenkung anzugeben, das für ein Netz mit unterschiedlichen Knotenbetreibern geeignet ist und bei dem eine Verlängerung der Signalisierungsinformation durch die durchlaufenen Knoten identifizierenden Informationen vermieden wird und trotzdem frühzeitig eine Schleifenbildung verhindert werden kann.

Gelöst wird diese Aufgabe erfindungsgemäß durch die Merkmale des Patentanspruchs 1.

Als Vorteil des erfindungsgemäßen Verfahrens ist anzusehen, daß für seine Implementierung weder eine Modifikationen der Netzstruktur noch Eingriffe in die Hardwarestruktur der Netzknoten, die insbesondere als Vermittlungsstellen ausgebildet sind, erforderlich sind. Ein in den Netzknoten ausgeführtes Steuerungsprogramm, das zum Ablauf des erfindungsgemäßen Verfahrens dient, ist für alle Netzknoten identisch, da in allen Knoten die gleichen Verfahrensschritte ausgeführt werden.

Ein weiterer wesentlicher Vorteil des erfindungsgemäßen Verfahrens ist in der durch das Verfahren vermittelten Flexibilität zu sehen, durch die etwaige Änderungen der Betreibersituation, inbesondere bei Vereinbarungsänderungen zwischen den Betreibern, mit äußerst geringem Aufwand berücksichtigt werden können.

Weitere Vorteile ergeben sich aus den im folgenden anhand der Zeichnung näher erläuterten Ausführungsbeispielen.

Es zeigt:
- Figur 1a: ein Informationsnetz mit Knoten und Knotenverbindungen,
- Figur 1b: eine Signalisierungsinformation,
- Figur 2: Tabellen zur Darstellung der Routeninformation in den Knoten B und F nach Figur 1.
- Figur 3: Tabellen zur Darstellung der Korrekturinformation in den Knoten B und F nach Figur 1,

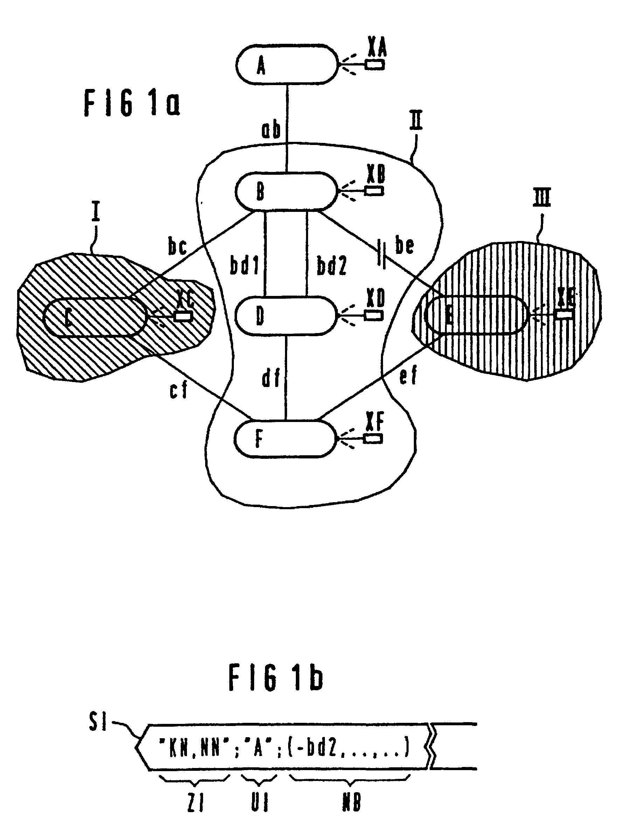

In Fig 1a ist ein Informationsnetz mit mehreren Knoten A, B, C, D, E, F, die über Knotenverbindungen untereinander verbunden sind, symbolisch dargestellt. Jeder der dargestellten Knoten repräsentiert ein Kommunikationssystem, insbesondere ein Fernsprechvermittlungssystem, an das jeweils eine Vielzahl von internen Teilnehmergeräten, z.B. Fernsprechendgeräte, Telefaxgeräte usw., angeschlossen sind. In der Zeichnung ist stellvertretend für die angeschlossenen Teilnehmergeräte jeweils ein Teilnehmergerät XA, XB, ..., XF dargestellt.

Die gezeigten Knotenverbindungen, z.B. ab, bc, be, usw. sind jeweils durch ein sogenanntes Leitungsbündel bestehend aus einer Vielzahl von Leitungselementen realisiert.

Die Knoten in dem gezeigten Netz sind unterschiedlichen Betreibern zugeordnet, d.h., daß über das Netz z.B. private Kommunikationssysteme mehrerer Firmen miteinander verbunden sind. So ist der Knoten C dem Betreiber I, die Knoten B, D, F dem Betreiber II und der Knoten E dem Betreiber III zugehörig. Der Knoten A steht stellvertretend für ein öffentliches Vermittlungssystem.

Mit einer Fernmeldeverbindung, die vom Teilnehmergerät XA zum Teilnehmergerät XE aufzubauen ist, hat der Knoten A die Funktion eines Ursprungsknotens und der Knoten E die Funktion eines Zielknotens. Weitere am Aufbau der Fernmeldeverbindung beteiligte Knoten werden als Transitknoten bezeichnet.

Beispielsweise läßt sich eine Fernmeldeverbindung zwischen den Teilnehmergeräten XA und XE über die Transitknoten B, D und F oder über die Transitknoten B, C, F aufbauen. Die unterschiedlichen Möglichkeiten ergeben sich aufgrund der vermaschten Struktur des Netzes und einer entsprechenden Konfigurierung der Netzknoten.

Zur Identifizierung der Knoten ist jedem Knoten im Netz eine individuelle Knotenrufnummer zugeordnet (nicht dargestellt). Beim Aufbau einer Fernmeldeverbindung wird in dem sendeseitigen Teilnehmergerät XA die Rufnummer des empfangsseitigen Teilnehmergerätes XE eingegeben, wobei diese aus einer, einen Nebenstellenbereich bezeichnenden Knotenrufnummer und aus einer den empfangsseitigen Teilnehmeranschluß, also das empfangsseitige Teilnehmergerät XE bezeichnenden Nebenstellennummer besteht.

In Fig 1b ist der Inhalt einer, einer aufzubauenden Fernmeldeverbindung zugehörigen Signalisierungsinformation SI dargestellt. Diese weist eine den Zielknoten und den empfangsseitigen Teilnehmeranschluß identifizierende Zielinformation ZI auf, die, wie vorstehend beschrieben, aus einer Rufnummer besteht, die sich aus einer Knotenrufnummer KN des Zielknotens und einer Nebenstellennummer NN des empfangsseitigen Teilnehmeranschlusses zusammensetzt. Im weiteren weist die Signalisierungsinformation SI eine den Ursprungsknoten identifizierende Ursprungsinformation UI auf und außerdem eine Netz-Berechtigungsinformation NB, in der die Knotenverbindungen angegeben sind, die für die betreffende Fernmeldeverbindung, die von einem Teilnehmer an dem Teilnehmergerät XA veranlaßt wurde, nicht benutzt werden dürfen, also als gesperrt anzusehen sind.

Beim Aufbau einer Fernmeldeverbindung zwischen den Teilnehmergeräten XA und XE wird bei der im vorliegenden Ausführungsbeispiel vorgesehenen Netzkonfiguration die Fernmeldeverbindung einschließlich ihrer Signalisierungsinformation SI, ausgehend vom Ursprungsknoten A als erstes dem Transitknoten B zugeführt.

Die Knoten weisen jeweils eine Steuerung auf, von der anhand mehrerer Informationen, auf die im folgenden noch näher eingegangen wird, für die eingetroffene Fernmeldeverbindung jeweils der unmittelbar nächste zu durchlaufende Knoten bzw. die unmittelbar nächste Knotenverbindung in Richtung des Zielknotens ermittelt wird.

Ein erster auch im Stand der Technik verwendete Informationstyp wird als Routeninformation bezeichnet. In jedem Knoten ist eine Routeninformation, z.B. in Form einer Tabelle gespeichert, von der ausschließlich in Abhängigkeit vom Zielknoten die technisch zulässigen d.h. möglichen Knotenverbindungen bezeichnet werden, die an den betreffenden Knoten unmittelbar angeschlossen sind. Anstelle der Knotenverbindungen können auch die über die Knotenverbindungen unmittelbar erreichbaren Nachbarknoten angegeben sein.

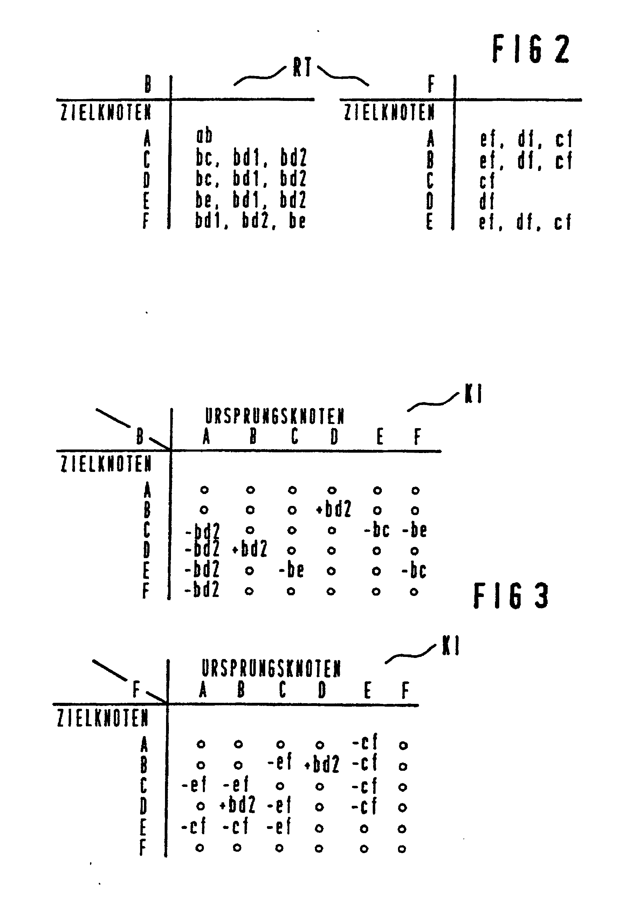

In Fig 2 sind die Routeninformation RT für den Knoten B (linke Seite) und den Knoten F (rechte Seite) aus Figur 1A jeweils in Form einer Tabelle dargestellt.

Trifft z.B. beim Knoten B eine Fernmeldeverbindung mit einer Signalisierungsinformation SI ein, deren Zielinformation ZI den Knoten A identifiziert, so ist aus der Routeninformation RT nur eine mögliche Knotenverbindung (nämlich 'ab') zu ermitteln. Wird als Zielknoten z.B. der Knoten E identifiziert, gibt die Routeninformation RT drei mögliche, im unmittelbaren Anschluß an den Knoten B zu durchlaufende Knotenverbindungen an; laut Beispiel die Knotenverbindungen be, bd1, bd2.

Die im Knoten F gespeicherte Routeninformation RT gibt zum Zielknoten C nur die Knotenverbindung cf und zum Zielknoten E die Knotenverbindungen ef, df und cf als zulässig an. Die Routeninformation RT , die knotenindividuell ausgebildet und gespeichert ist, wird im wesentlichen auf der Basis technischer Aspekte erstellt. Die Routeninformation RT ist damit unabhängig von der Betreibersituation, von evtl. Schleifenbildungen und von Berechtigungen. Die Routeninformation RT in den Knoten eines Netzes muß in der Regel nur dann geändert werden, wenn dem Netz Knoten und Knotenverbindungen hinzugefügt werden bzw. diese aus dem Netz entfernt werden.

Als weiterer Informationstyp ist in den Knoten eines Netzes jeweils eine Korrekturinformation KI gespeichert, die in Abhängigkeit von den im Zusammenhang mit einer eingetroffenen Fernmeldeverbindung ermittelten Ursprungs- und Zielknoten, wenigstens für unmittelbar an den betreffenden Knoten angeschlossene Knotenverbindungen Sperr- oder Freigabevermerke aufweisen kann.

In Fig 3 sind zu den Knoten B und F die Korrekturinformationen KI jeweils in Form einer Matrix dargestellt. Sperrvermerke sind mit einem "-", Freigabevermerke mit einem "+" markiert. Die dem Knoten B zugehörige Matrix (linke Seite) weist eine Vielzahl von Sperrvermerken auf, so ist z.B. die Knotenverbindung bd2 für eine Fernmeldeverbindung gesperrt, die den Ursprungsknoten A und den Zielknoten C, D, E oder F aufweist. Weiterhin ist die Knotenverbindung be für eine Verbindung gesperrt, die den Ursprungsknoten F und den Zielknoten C aufweist, und die Knotenverbindung bc ist für eine Fernmeldeverbindung mit dem Ursprungsknoten F und dem Zielknoten E gesperrt.

Die dem Knoten F zugeordnete Matrix (rechte Seite) enthält für Fernmeldeverbindungen mit dem Zielknoten C und den Ursprungsknoten A oder B Sperrvermerke für die Knotenverbindung ef; die Knotenverbindung cf ist für Fernmeldeverbindungen mit dem Zielknoten E und den Ursprungsknoten A oder B gesperrt. Ebenso ist die Knotenverbindung cf für Fernmeldeverbindungen mit dem Ursprungsknoten E und dem Zielknoten A, B, C oder D gesperrt.

Selbstverständlich können an den Kreuzungspunkten der Matrix gegebenenfalls auch mehrere Freigabe- und/oder Sperrvermerke für von dem betreffenden Knoten wegführende Knotenverbindungen hinterlegt sein.

Die Korrekturinformation KI wird in die Knoten üblicherweise beim Installieren des Netzes eingespeichert. Die Korrekturinformation KI dient zur knotenindividuellen Korrektur der in der Signalisierungsinformation SI einer aufzubauenden Fernmeldeverbindung enthaltenen Netz-Berechtigungsinformation NB, d.h. die Netz-Berechtigungsinformation NB wird zusammen mit der Korrekturinformation KI, die in Abhängigkeit des Ursprungs- und Zielknotens der Fernmeldeverbindung Sperr- bzw. Freigabevermerke aufweisen kann, zur Bildung einer ausschließlich auf den Knoten bezogenen Knoten-Berechtigungsinformation benutzt.

Zusätzlich zu den in der Netz-Berechtigungsinformation NB enthaltenen Sperrvermerken werden weitere in der Korrekturinformation KI angegebene Sperrvermerke in die Knoten-Berechtigungsinformation übernommen. Aber eine in der Netz-Berechtigungsinformation NB enthaltener Sperrvermerk für eine Knotenverbindung wird aufgrund eines in der Korrekturinformation KI hinterlegten Freigabevermerkes für die gleiche Knotenverbindung nicht in die Knoten-Berechtigungsinformation übernommen.

Die Korrekturinformation KI für die Knoten wird von einem Netzadministrator erstellt und bei Initialisierung des Netzes jedem Knoten zur Einspeicherung übermittelt. Bei der Erstellung der Korrekturinformation KI wird anhand eines bekannten Verfahrens einer möglichen Schleifenbildungen bei der Leitweglenkung begegnet, indem bei vorliegender Netztopologie für jeden Knoten betrachtet diejenigen Knotenverbindungen in Abhängigkeit vom Ursprungs- und Zielknoten einer Fernmeldeverbindung einen Sperrvermerk erhalten, die zu einer Schleife führen.

Ist beispielsweise eine Fernmeldeverbindung am Knoten F eingetroffen, und im Knoten F wird als Ursprungsknoten der Knoten B und als Zielknoten der Knoten E ermittelt, findet sich in der Korrekturinformation KI des Knotens F ein Sperrvermerk für die Knotenverbindung cf, da diese über den Knoten C wieder zu Knoten B führt und damit eine Schleife erzeugt wird. Die Routeninformation RT an sich läßt diesen Weg zu, insbesondere wenn die Knotenverbindung be z.B. unterbrochen und die Knotenverbindung ef überlastet ist.

Demgegenüber wäre eine Fernmeldeverbindung, die beim Knoten F eintrifft, und die als Zielknoten den Knoten E und als Ursprungsknoten den Knoten D aufweist, ohne unmittelbare Schleifengefahr über die Knotenverbindung cf zu führen.

Ein weiterer Aspekt bei der Erstellung der Korrekturinformationen KI berücksichtigt, daß die Knoten in einem Netz unterschiedlichen Betreibern zugeordnet sind und die Betreiber spezielle Nutzungsvereinbarungen getroffen haben. Zum Beispiel hat in dem Netz nach Fig 1a der Betreiber I mit dem Betreiber II und der Betreiber II mit dem Betreiber III jeweils eine Nutzungsvereinbarung getroffen. Eine Nutzungsvereinbarung zwischen dem Betreiber I und dem Betreiber III gibt es damit nicht. Soll beispielsweise vom Knoten E nach Knoten B eine Fernmeldeverbindung aufgebaut werden und ist die direkte Knotenverbindung be ausgefallen, so trifft die Fernmeldeverbindung am Knoten F ein. Ist der Knoten D auch ausgefallen, so würde die einzig mögliche noch verbleibende Knotenverbindung cf zu dem Betreiber I führen, der mit dem Betreiber des Knotens E keine Vereinbarung hat. Deshalb ist in der Korrekturinformation KI des Knotens F ein Sperrvermerk für die Knotenverbindung cf hinterlegt.

Bei der Erstellung der Korrekturinformation KI wird außerdem noch berücksichtigt, daß in einem Netz Knotenverbindungen eingerichtet sein können, auf denen spezielle Übertragungsverfahren implementiert sind. Zum Beispiel wird auf der Knotenverbindung bd2 zwischen dem Knoten B und D Sprachkompression durchgeführt. Eine bestehende Anforderung besagt jedoch, daß über ein Bündel, auf dem Sprachkompression durchgeführt wird, keine Amtsgespräche gelenkt werden dürfen.

Unter der Annahme, daß in Fig 1a der Knoten A das öffentliche Netz repräsentiert, darf eine Fernmeldeverbindung vom Knoten A zum Knoten D nicht über die Knotenverbindung bd2 geführt werden. In der Netz-Berechtigungsinformation NB der in FIG 1b beispielhaft angegebenen Signalisierungsinformation SI ist deshalb für die Knotenverbindung bd2 ein Sperrvermerk hinterlegt.

Bei einer anderen Fernmeldeverbindung, die vom Teilnehmergerät XA am Knoten A, der wieder das öffentliche Netz repräsentiert, zum Teilnehmergerät XB am Knoten B geführt werden soll, ist kein Sperrvermerk in der Netz-Berechtigungsinformation NB eine der Fernmeldeverbindung zugehörigen Signalisierungsinformation SI erforderlich. Ist allerdings vom Teilnehmergerät XB eine Anrufumleitung zum Teilnehmer XD am Knoten D veranlaßt worden, gilt die Regel, daß im Falle einer Anrufumleitung die Netz-Berechtigung des die Anrufumleitung veranlassenden Teilnehmers die Netz-Berechtigungsinformation des die Fernmeldeverbindung veranlassenden Teilnehmers überschreibt. Im vorstehend behandelten Beispiel ist für den Teilnehmer an dem Teilnehmergerät XB kein Sperrvermerk für die Knotenverbindung bd2 vorgesehen, also muß in der Korrekturinformation KI des Knotens B ein Sperrvermerk für die Knotenverbindung bd2 in den Fällen hinterlegt sein, in denen der Ursprungsknoten A und der Zielknoten z.B. D oder F ist.

Eine gelegentliche Redundanz zwischen Netz-Berechtigungsinformation NB und Korrekturinformation KI kann auftreten, prinzipiell jedoch ist die Netz-Berechtigungsinformation NB an den einzelnen Teilnehmer bzw. dessen Teilnehmergerät gebunden und berücksichtigt nicht die Topologie des Netzes. Die Korrekturinformation KI berücksichtigt übergeordnete Routinggesichtspunkte (Netzschleifen, unerlaubte Netzübergänge, usw.) und ist nicht auf den einzelnen Teilnehmer bzw. dessen Berechtigung ausgerichtet.

Die in den Knoten vorgesehene und bereits erwähnte Knotensteuerung, die von ihrem Aufbau her entsprechend der im eingangs genannten Stand der Technik ausgebildet sein kann, wertet zunächst die Signalisierungsinformation SI der betreffenden Fernmeldeverbindung aus. Aus der Knotenrufnummer KN und der Nebenstellennummer NN wird die den Zielknoten identifizierende Zielinformation ermittelt. Aus der Ursprungsinformation UI erhält die Knotensteuerung die Information über den Ursprungsknoten und aus der Netz-Berechtigungsinformation NB werden die gesperrten Knotenverbindungen gelesen. Anschließend wird aus der in dem betreffenden Knoten gespeicherten Korrekturinformation KI die zu dem Ursprungs- und Zielknoten eingetragenen Sperrund Freigabevermerke ausgelesen, wobei zusammen mit den in der Netz-Berechtigungsinformation NB hinterlegten Sperrvermerken eine Knoten-Berechtigungsinformation gebildet wird.

Nach Ermittlung der Knoten-Berechtigungsinformation werden von der Knotensteuerung in der in dem betreffenden Knoten gespeicherten Routeninformation RT, in Abhängigkeit des in der Zielinformation identifizierten Zielknotens, die möglichen in unmittelbarer Folge an dem betreffenden Knoten zu durchlaufenden Knotenverbindungen ermittelt. Finden sich dabei Knotenverbindungen, für die Sperrvermerke in der Knoten-Berechtigungsinformation enthalten sind, werden diese Knotenverbindungen im weiteren nicht mehr als mögliche Wege behandelt. Aus den verbleibenden Knotenverbindungen wird eine, z.B. die an erster Stelle genannte Knotenverbindung ausgewählt, und die Fernmeldeverbindung wird auf dieser Knotenverbindung zum unmittelbar nächsten Knoten weitergeleitet, wobei in der Signalisierungsinformation SI die beim Eintreffen der Fernmeldeverbindung vorliegende Zielinformation ZI, Ursprungsinformation UI und Netz-Berechtigungsinformation NB weitergegeben werden.

## Patentansprüche

1. Verfahren zur Leitweglenkung von Fernmeldeverbindungen in einem Netz,
- bei dem die Fernmeldeverbindungen von einer sendeseitigen Endeinrichtung zu einem Ursprungsknoten und auf Knotenverbindungen über Transitknoten zu einem Zielknoten gelenkt werden,
- bei dem in eine Signalisierungsinformation (SI) einer aufzubauenden Fernmeldeverbindung eine den Ursprungsknoten identifizierende Ursprungsinformation (UI) und eine den Zielknoten identifizierende Zielinformation (ZI) eingefügt werden, und
- bei dem in den Knoten jeweils eine Routeninformation (RT) gespeichert ist, die in Abhängigkeit von dem Zielknoten einer aufzubauenden Fernmeldeverbindung die in Richtung des Zielknotens weisenden unmittelbar angeschlossenen Knotenverbindungen identifiziert,
**dadurch gekennzeichnet, dass**
- in die Signalisierungsinformation (SI) der aufzubauenden Fernmeldeverbindung eine Netz-Berechtigungsinformation (NB) zur Identifizierung von für die aufzubauende Fernmeldeverbindung gesperrten Knotenverbindungen eingefügt wird,
- dass in den Knoten jeweils eine Korrekturinformation (KI) gespeichert ist, die abhängig von der Ursprungs- und Zielinformation (UI,ZI) einer aufzubauenden Fernmeldeverbindung Sperroder Freigabevermerke wenigstens für unmittelbar angeschlossene Knotenverbindungen aufweisen kann, und
- dass aus der Netz-Berechtigungsinformation (NB) und aus Sperr- oder Freigabevermerken zu einer aufzubauenden Fernmeldeverbindung eine Knoten-Berechtigungsinformation gebildet wird, anhand der aus der Routeninformation (RT) eine im weiteren von der aufzubauenden Fernmeldeverbindung zu durchlaufende Knotenverbindung ermittelt wird.

## Claims

1. Method for routing telecommunications connections in a network,
- in which the telecommunications connections are routed from a transmit-end terminal to a source node, and on node connections to a destination node via transit nodes,
- in which a source information item (UI) which identifies the source node and a destination information item (ZI) which identifies the destination node are inserted into a signalling information item (SI) of a telecommunications connection which is to be set up, and
- in which in each case a route information item (RT) is stored in the nodes, which route information item (RT) identifies, as a function of the destination node of a telecommunications connection to be set up, the directly connected node connections which point in the direction of the destination node,
**characterized in that**
- a network authorization information item (NB) for identifying node connections which are barred for the telecommunications connection to be set up is inserted into the signalling information item (SI) of the telecommunications connection to be set up,
- **in that** in each case a correction information item (KI) which, as a function of the source and destination information items (UI, ZI) of a telecommunications connection to be set up, can have blocking or release flags at least for directly connected node connections, and
- **in that** a node authorization information item is formed from the network authorization information item (NB) and from locking or release flags to a telecommunications connection which is to be set up, by means of which a node connection which is subsequently to be passed through by the telecommunications connection to be set up is determined from the route information item (RT).

## Revendications

1. Procédé destiné à l'acheminement de communications dans un réseau
- dans lequel les communications sont guidées par un dispositif terminal côté émission vers un centre nodal d'origine et sur des liaisons entre centres nodaux, à travers des centres de transit, vers un centre nodal de destination,
- dans lequel une information d'origine (UI) identifiant le centre nodal d'origine et une information de destination (ZI) identifiant le centre nodal de destination sont insérées dans une information de signalisation (SI) d'une communication à établir,
- dans lequel est mémorisée, dans chaque centre nodal, une information de routage (RT) qui identifie, en fonction du centre nodal de destination d'une communication à établir, les liaisons entre centres nodaux raccordés directement qui conduisent dans la direction du centre nodal de destination,
**caractérisé par le fait**
- **que**, dans l'information de signalisation (SI) de la communication à établir, est insérée une information (NB) d'autorisation d'accès aux réseaux destinée à l'identification de liaisons entre centres nodaux interdites pour la communication à établir,
- **que**, dans chaque centre nodal, est mémorisée une information de correction (KI), qui peut comporter, en fonction de l'information d'origine et de l'information de destination (UI, ZI) d'une communication à établir, des remarques d'interdiction ou de libération au moins pour des liaisons entre centre nodaux raccordées directement et
- **que**, à partir de l'information (NB) d'autorisation d'accès aux réseaux et des remarques d'interdiction ou de libération pour la communication à établir, une information d'autorisation d'accès au centre nodal est formée à l'aide de laquelle, à partir de l'information de routage (RT), on détermine une liaison entre centres nodaux que la communication à établir doit parcourir ensuite.
